# FASCICULE DE BREVET EUROPEEN

(11) **EP 1 702 158 B1**
(45) Date de publication et mention de la délivrance du brevet: **16.04.2008**
(21) Numéro de dépôt: 04791556.6
(22) Date de dépôt: 15.10.2004
(51) Int. Cl.: F03B 3/12

(54) **ORGANE FORMANT POINTE POUR ROUE DE MACHINE HYDRAULIQUE, PROCEDE D'ASSEMBLAGE D'UNE TELLE ROUE, ROUE ET MACHINE HYDRAULIQUE EQUIPEES D'UN TEL ORGANE**
SPITZENBILDUNGSELEMENT FÜR DAS RAD EINER HYDRAULISCHEN MASCHINE, VERFAHREN ZUR MONTAGE SOLCH EINES RADS UND MIT SOLCH EINEM ELEMENT VERSEHENE HYDRAULISCHE MASCHINE
TIP-FORMING ELEMENT FOR HYDRAULIC MACHINE WHEEL, METHOD OF ASSEMBLING ONE SUCH WHEEL, AND WHEEL AND HYDRAULIC MACHINE EQUIPPED WITH ONE SUCH ELEMENT

(30) Priorité: 16.10.2003 FR 0312101
(43) Date de publication de la demande: 20.09.2006
(73) Titulaire: Alstom Technology Ltd, 5400 Baden (CH)
(72) Inventeur: COUSTON, Michel, Henri, 38180 Seyssins (FR)
(74) Mandataire: Myon, Gérard Jean-Pierre
(86) Numéro de dépôt international: PCT/FR2004/002645
(87) Numéro de publication internationale: WO 2005/038243

(56) Documents cités:
- DE-C- 971 042
- US-A- 3 504 990
- US-A- 4 017 211

## Description

La présente invention a trait à un organe apte à être rapporté sur le plafond d'une roue de machine hydraulique. L'invention a également trait à un procédé de montage d'une telle roue. L'invention a enfin trait à une roue équipée d'un tel organe, ainsi qu'à une machine hydraulique comprenant une telle roue.

Dans le domaine des turbines hydrauliques, il est connu, par exemple de DE-C-971 042, d'équiper la partie aval du plafond d'une roue avec un organe axisymétrique parfois dénommé « pointe », dont la surface externe prolonge sensiblement la surface mouillée du plafond de la roue et a un diamètre qui va en diminuant vers l' aval . Cet organe ou « pointe » prolonge le guidage de l'écoulement jusqu'à proximité de l'axe de rotation de la roue. De la même manière, il est connu d'utiliser des organes ou pointes de guidage dans les pompes, les turbines-pompes et les autres turbines à réaction.

Dans les machines hydrauliques connues, l'écoulement traversant la roue peut donner naissance à des tourbillons ou turbulences en forme de « torche » ou de « tire-bouchon » qui confèrent à l'écoulement un caractère asymétrique par rapport à l'axe de rotation de la roue. Ces turbulences en torche s'avèrent particulièrement gênantes dans la mesure où elles provoquent des fluctuations de pression et/ou de puissance qui peuvent nuire à la stabilité du réseau qu'alimente la machine ou aux performances mécaniques de cette machine.

C'est à ces inconvénients qu'entend plus particulièrement remédier l'invention en proposant un nouvel organe pouvant être rapporté sur le plafond d'une roue et qui permet un meilleur guidage de l'écoulement au voisinage de l'axe de rotation de la roue.

Dans cet esprit, l'invention concerne un organe apte à être rapporté sur le plafond ou le moyeu d'une roue de machine hydraulique, cet organe étant pourvu d'une surface axisymétrique apte à être disposée dans le prolongement de la surface mouillée du plafond ou du moyeu de la roue et convergente, en s'éloignant de cette surface mouillée et en direction de l'axe de rotation de la roue lorsque cet organe est rapporté sur cette roue. Cet organe est caractérisé en ce qu'il est également pourvu d'une seconde surface axisymétrique, décalée axialement par rapport à la surface convergente et elle-même divergente en s'éloignant de la première surface convergente.

L'organe de l'invention permet de guider efficacement l'écoulement dans une roue de turbine en aval du plafond ou du moyeu et à proximité de l'axe de rotation de la roue, ce qui modifie la structure des « torches turbulentes ». Cet organe est adapté pour être monté sur une roue Francis équipant une turbine et apporte sensiblement les mêmes avantages dans le cas d'une roue équipant une pompe ou une turbine-pompe de type Francis ou tout autre type de turbine ou de turbine pompe hydraulique, notamment de type hélice, Deriaz, Kaplan. En configuration montée de l'organe, la seconde surface est décalée axialement, par rapport à la première, à l'opposé du plafond ou du moyeu de la roue. L'organe de l'invention peut être utilisé dans le cadre d'une nouvelle installation ou dans le cadre de la réhabilitation d'une installation existante.

Selon des aspects avantageux mais non obligatoires, un organe conforme à l'invention peut incorporer un ou plusieurs des caractéristiques suivantes prises dans toute combinaison techniquement admissible.
- l'organe est pourvu d'une surface globalement cylindrique disposée entre les surfaces convergentes et divergentes précitées ;
- l'organe est pourvu d'une surface de terminaison prolongeant la surface divergente à l'opposé de la surface convergente. Cette surface de terminaison peut être à génératrice sensiblement rectiligne ou, au contraire, à génératrice courbe ;
- les surfaces précitées sont à symétrie de révolution autour d'un axe commun qui est confondu avec l'axe de rotation de la roue lorsque l'organe est rapporté sur cette roue ;
- l'organe peut être réalisé en métal ou en matériau composite ;
- l'organe peut être monobloc ou formé de plusieurs pièces assemblées, les surfaces convergentes et divergentes pouvant être, dans le second cas, formées par deux pièces distinctes de cet organe. Dans ce second cas, la position relative des surfaces convergente et divergente peut être réglable.

L'invention concerne également une roue de machine hydraulique équipée d'un organe tel que décrit ci-dessus. Une telle roue présente de meilleures caractéristiques hydrauliques et permet de changer la structure hydrodynamique de torches turbulentes se développant à proximité.

On peut prévoir que l'organe équipant une telle roue dépasse en deçà de la ceinture de la roue lorsqu'elle est installée, ce qui permet de prolonger le guidage obtenu jusqu'en aval de la roue dans le cas d'une turbine.

L'invention concerne également une machine hydraulique qui comprend une roue telle que précédemment décrite. Une telle machine peut être une turbine, une pompe ou une turbine-pompe.

L'invention concerne enfin un procédé d'assemblage d'une roue ou d'une machine telles que décrites ci-dessus qui comprend une étape dans laquelle on fixe sur le plafond de cette roue un organe tel que précédemment décrit. Lorsque cet organe est formé de plusieurs pièces, on peut prévoir de fixer d'abord une première pièce sur le plafond de la roue, puis une seconde pièce sur la première.

L'invention sera mieux comprise et d'autres avantages de celle-ci apparaîtront plus clairement à la lumière de la description qui va suivre de six modes de réalisation d'un organe conforme à l'invention et d'un mode de réalisation d'une roue Francis conforme à l'invention, donnée uniquement à titre d'exemple et faite en référence aux dessins annexés dans lesquels:
- la figure 1 est une vue en perspective par l'aval d'une roue de turbine conforme à l'invention en cours d'équipement avec un organe conforme à un premier mode de réalisation de l'invention ;
- la figure 2 est une vue de côté avec arrachement partiel de la roue de la figure 1 équipée de l'organe correspondant, cet organe étant représenté en coupe longitudinale ;
- la figure 3 est une vue de côté d'un organe conforme à un deuxième mode de réalisation de l'invention ;
- la figure 4 est une vue analogue à la figure 3, pour un organe conforme à un troisième mode de réalisation de l'invention ;
- la figure 5 est une vue analogue à la figure 3, pour un organe conforme à un quatrième mode de réalisation de l'invention ;
- la figure 6 est une vue analogue à la figure 3, pour un organe conforme à un cinquième mode de réalisation de l'invention et
- la figure 7 est une vue analogue à la figure 3, pour un organe conforme à un sixième mode de réalisation de l'invention.

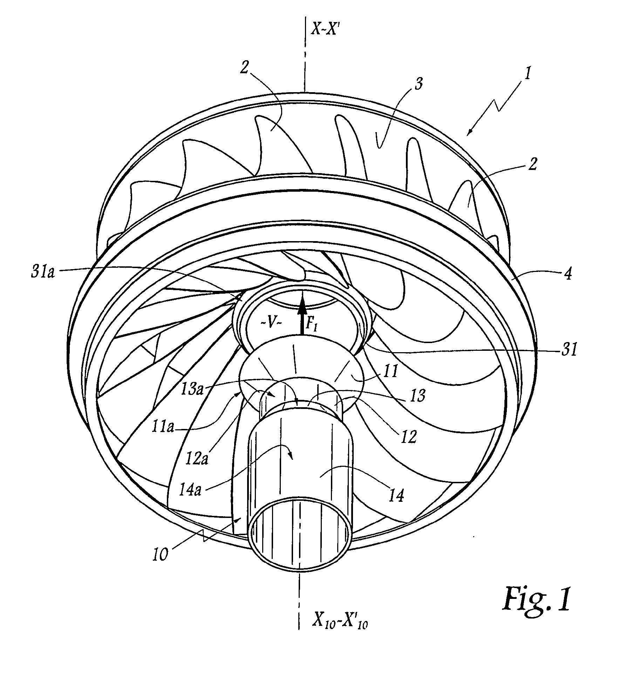

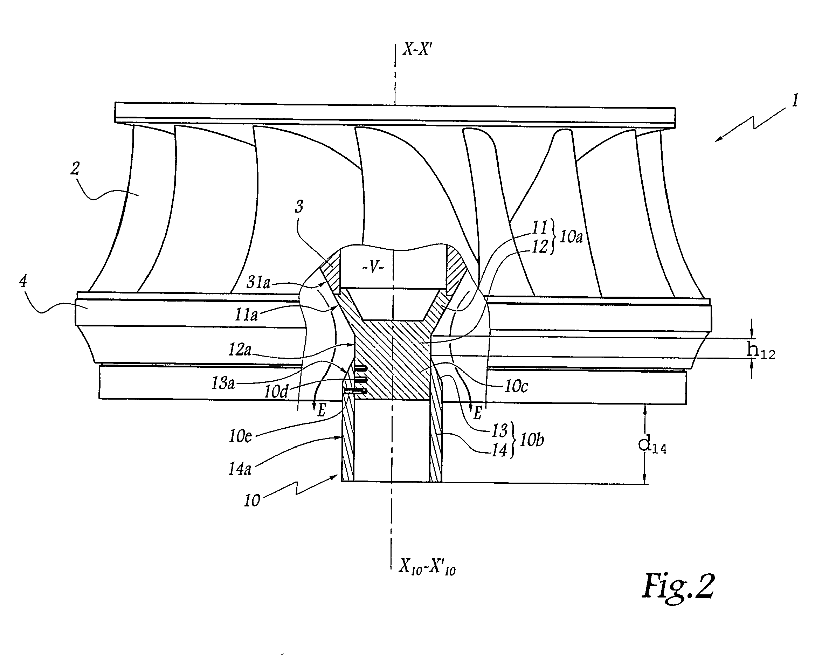

La roue de turbine Francis 1 représentée aux figures 1 et 2 comprend des aubes 2 identiques et régulièrement réparties autour d'un axe central X-X' de rotation de la roue 1. Un plafond 3 est prévu en partie supérieure et radiale interne de la roue 1, alors qu'une ceinture 4 borde la partie inférieure, radiale et externe des aubes 2. Un conduit d'écoulement est ainsi créé entre chaque paire de deux aubes adjacentes, ce conduit étant délimité par le plafond 3 et la ceinture 4.

Un organe 10 formant « pointe » est prévu pour être monté sur la partie aval 31 du plafond 3 afin d'obturer au moins partiellement l'accès par l'aval au volume interne V de ce plafond, ce volume interne devant demeurer accessible pour le montage de la roue 1, notamment son raccordement avec l'arbre d'un alternateur.

L'organe ou pointe 10 comprend une portion tronconique 11 dont la surface externe 11a est dimensionnée pour prolonger la surface mouillée 31a du plafond 3.

On note X₁₀-X'₁₀ l'axe central de l'organe 10 qui est, en pratique, l'axe de symétrie de celui-ci. La surface 11a qui est centrée sur l'axe X₁₀-X'₁₀ est convergente vers l'axe X₁₀-X'₁₀ en s'éloignant de la surface 31a lorsque l'organe 10 est monté sur la roue 1. L'organe 10 comprend également une portion 12, cylindrique et à section circulaire, qui prolonge la portion 11 à l'opposé de la partie aval 31 du plafond 3. On note 12a la surface externe de cette partie 12.

L'organe 10 comprend également une seconde partie tronconique 13 centrée sur l'axe X₁₀-X'₁₀ et qui prolonge la partie 12 à l'opposé de la portion 11 et dont on note 13a la surface externe. Cette surface est décalée le long de l'axe X₁₀-X'₁₀ par rapport à la surface 11a et divergente par rapport à l'axe X₁₀-X'₁₀ en s'éloignant des portions 11 et 12.

L'organe 10 comprend enfin une partie cylindrique à section circulaire 14 dont on note 14a la surface extérieure.

Les surfaces 11a, 12a, 13a et 14a sont destinées à être mouillées par l'écoulement d'eau E circulant entre les aubes 2.

Lorsque l'organe 10 est en place sur la roue 1, comme représenté sur la figure 2, la surface 11a est en amont de la surface 12a et la surface 13a est en aval de la surface 12a. La surface 13a est donc en aval de la surface 11a et l'écoulement E provenant des conduits créés entre les aubes adjacentes peut converger vers l'axe X-X' en léchant la surface 11a, puis diverger en léchant la surface 13a et enfin s'écouler vers l'aval en léchant la surface 14a. Du fait de ce mouvement de convergence et de divergence de l'écoulement E, on modifie la structure hydrodynamique des torches turbulentes ou des tourbillons en tire-bouchon au voisinage de l'axe X-X'. En d'autres termes, les surfaces 11a et 13a permettent de conférer à l'écoulement E une composante centripète en direction de l'axe X₁₀-X'₁₀ puis une composante centrifuge par rapport à cet axe.

Les surfaces 11a et 13a convergent toutes deux en direction de la surface 12a, en sens opposé. Elles convergent donc l'une en direction de l'autre.

Comme il ressort plus particulièrement de la figure 2, l'organe 10 est bipartite et est constitué d'une première pièce 10a qui forme les portions 11 et 12 et d'une deuxième pièce 10b qui forme les portions 13 et 14. L'assemblage entre les pièces 10a et 10b peut être réalisé par tout moyen approprié. Par exemple, la partie circulaire 10c de la pièce 10a qui est destinée à être engagée dans la pièce 10b peut être pourvue de plusieurs orifices taraudés 10d dans chacun desquels peut sélectivement être vissée une vis 10e dont la tête triangulaire est reçue dans un logement de forme correspondante ménagée dans la pièce 10b.

Le fait de prévoir plusieurs orifices 10d permet de pouvoir régler l'altitude de la pièce 10b par rapport à la pièce 10a, c'est-à-dire en pratique, la hauteur h₁₂ de la surface 12a. Ceci est particulièrement adapté à la réalisation d'une maquette de roue incorporant l'invention.

Bien entendu, plusieurs vis 10e peuvent être prévues réparties autour de l'axe X-X'.

Selon des variantes non représentées de l'invention, plus particulièrement adaptées à la réalisation de roues destinées à être mises en oeuvre industriellement, l'assemblage entre les pièces 10a et 10b peut avoir lieu par soudage, éventuellement sur site une fois la roue montée. Il peut également être réalisé au moyen d'une bride avec boulonnage ou par collage.

On peut, en outre, prévoir que l'organe ou pointe 10 est réglable en hauteur, éventuellement de façon continue.

L'organe 10 peut être monté en une opération sur la roue 1, comme représenté par la flèche F₁ à la figure 1.

Le fait que l'organe 10 est bipartite permet également de le monter en deux étapes successives sur la roue 1, ce qui permet de tenir compte du fait que la portion 14 de l'organe 10 peut dépasser en deçà de la ceinture 4 sur une distance d₁₄ significative.

L'organe 10 est avantageusement réalisé en métal, notamment en acier inoxydable ou en bronze. Il peut également être réalisé en matériau composite, avec une résine en matière organique chargée en fibres de renfort, telles que des fibres de verre, de carbone ou d'aramide.

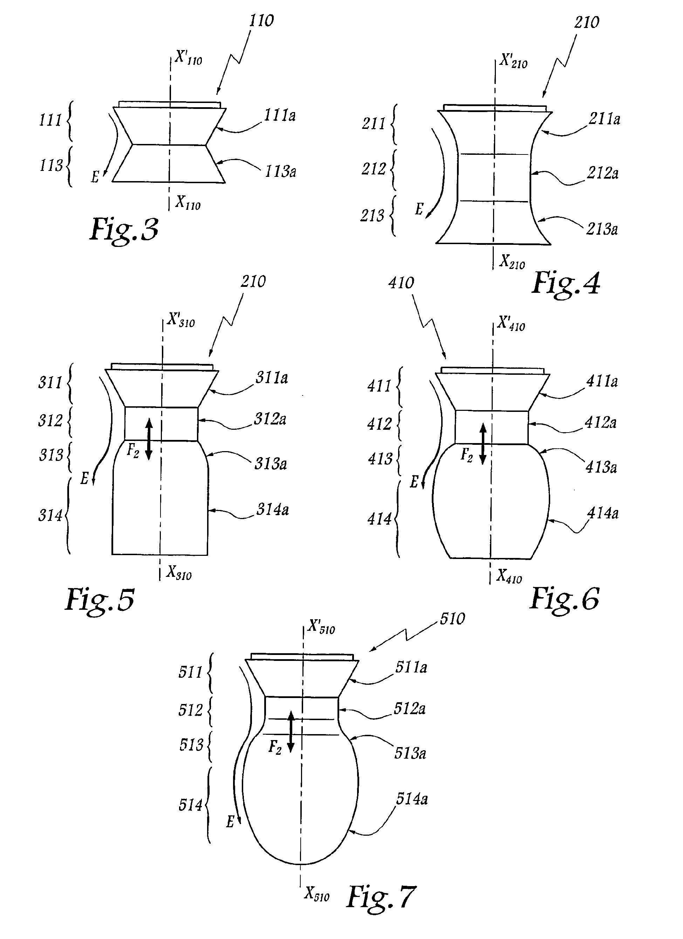

Dans le second mode de réalisation de l'invention représenté à la figure 3, les éléments analogues à ceux du premier mode de réalisation portent des références identiques augmentées de 100. L'organe 110 de ce mode de réalisation comprend deux portions tronconiques 111 et 113. La portion 111 est convergente en direction de l'axe central X₁₁₀-X'₁₁₀ de l'organe 110 dans le sens de l'écoulement de l'eau lorsque l'organe 110 équipe une roue de turbine Francis. La portion 113 est divergente par rapport à ce même axe et lorsqu'on considère le même écoulement. On note respectivement 111a et 113a les surfaces externes mouillées de ces portions.

Ce mode de réalisation présente l'avantage particulier d'une grande simplicité et d'une faible inertie puisqu'il est dépourvu de portion cylindrique analogue aux portions 12 et 14 du premier mode de réalisation. On peut considérer que la hauteur de la portion cylindrique qui correspondrait à la portion 12 du premier mode de réalisation est ici nulle.

La surface 111a, qui converge vers l'axe X₁₁₀-X'₁₁₀ dans le sens de l'écoulement E, est disposée en amont de la surface 113a qui diverge par rapport à cet axe dans le sens de cet écoulement. Les surfaces 111a et 113a sont convergentes l'une en direction de l'autre.

Dans le troisième mode de réalisation de l'invention représenté à la figure 4, les éléments analogues à ceux du premier mode de réalisation portent des références identiques augmentées de 200. L'organe 210 de ce mode de réalisation a globalement une forme de bobine, avec une portion 211 dont la surface externe 211a est convergente en direction de l'axe central X₂₁₀-X'₂₁₀ de cet organe dans le sens de l'écoulement E lorsque cet organe est monté sur une roue du type de la roue 1. Cet organe comporte également une portion centrale cylindrique 212 dont on note 212a la surface externe mouillée, ainsi qu'une portion divergente 213 dont on note 213a la surface externe.

Dans ce mode de réalisation, les surfaces 211a et 213a ne sont pas tronconiques mais sont à génératrice courbe avec une concavité tournée vers l'extérieur, ce qui permet d'obtenir un raccordement tangentiel entre les surfaces 211a et 212a, d'une part, 212a et 213a, d'autre part.

Dans le quatrième mode de réalisation de l'invention représenté à la figure 5, les éléments analogues à ceux du premier mode de réalisation portent des références identiques augmentées de 300. L'organe 310 de ce mode de réalisation diffère de celui du premier mode de réalisation essentiellement en ce que la surface externe 313a de la portion divergente 313 est à génératrice courbe avec sa concavité vers l'axe central X₃₁₀-X'₃₁₀ de l'organe 310, ce qui confère à cette portion une forme bombée. Comme précédemment, une portion 311 convergente, une portion 312 cylindrique et une portion 314 cylindrique sont prévues. On note respectivement 311a, 312a, 314a les surfaces externes mouillées des portions 311, 312 et 314.

Dans le cinquième mode de réalisation représenté à la figure 6, les éléments analogues à ceux du premier mode de réalisation portent des références identiques augmentées de 400. Ce mode de réalisation diffère du précédent en ce que les portions aval 413 et 414 sont toutes deux à génératrice courbe avec une concavité tournée vers l'axe central X₄₁₀-X'₄₁₀ de cet organe 410. Les portions amont 411 et 412 ont la même géométrie que dans le premier mode de réalisation. On note respectivement 411a, 412a, 413a et 414a les surfaces externes mouillées de ces portions.

Dans le sixième mode de réalisation de l'invention représenté à la figure 7, les éléments analogues à ceux du premier mode de réalisation portent des références identiques augmentées de 500. La portion convergente 511 de ce mode de réalisation a une surface externe 511a dont la génératrice est courbe avec une concavité tournée vers l'extérieur, d'une façon analogue à la surface 211a de l'organe 210 du troisième mode de réalisation. Une portion cylindrique 512 prolonge la partie 511 et sa surface externe 512a est à génératrice rectiligne. Une portion divergente 513 prolonge la portion 512 et sa surface externe 513a est à génératrice courbe, alors qu'une portion 514 prolonge la portion 513 avec une surface externe 514a dont la génératrice est également courbe, les portions 513 et 514 définissant ensemble une forme d'ampoule ou de bulbe correspondant au fait que la surface 514 se prolonge jusqu'au niveau de l'axe central X₅₁₀-X'₅₁₀ de l'organe 510.

Dans les modes de réalisation des figures 5, 6 et 7, les portions 313 et 314, 413 et 414, respectivement 513 et 514, peuvent être réglables en hauteur, de façon continue ou incrémentale, par rapport aux portions 311 et 312, 411 et 412, respectivement 511 et 512, comme montré par la double flèche F₂.

Quel que soit le mode de réalisation, l'organe conforme à l'invention peut être monobloc ou formé de deux ou de plus de deux pièces principales, avec, dans ce second cas, les avantages mentionnés au sujet du premier mode de réalisation.

Les caractéristiques techniques des différents modes de réalisation décrits ci-dessus peuvent être combinées entre elles dans le cadre de la présente invention.

Bien entendu, tous les organes représentés peuvent être montés sur une roue du type de la roue 1 représentée avec le premier mode de réalisation.

Un organe conforme à l'invention peut être monté sur une roue équipant une pompe ou une turbine-pompe. Dans ce cas, sa partie la plus éloignée du plafond de la roue est de préférence fermée, c'est-à-dire ne présente pas d'ouverture dans laquelle pourrait s'écouler de l'eau en provenance de la conduite amont inférieure. Dans ce cas, l'écoulement a lieu dans le sens inverse de celui représenté par les flèches E sur les figures.

L'invention a été représentée lors de sa mise en oeuvre avec une roue Francis. Elle est cependant applicable à d'autres types de machines hydrauliques, notamment de type hélice, Deriaz ou Kaplan. Dans ce cas, l'organe de l'invention est accroché sur le moyeu de la turbine ou de la pompe.

Dans tous les cas, la première surface, convergente en direction de l'axe de rotation de la roue dans le sens de l'écoulement, est, en configuration montée de l'organe, disposée en amont de la seconde surface, divergente par rapport à cet axe, ce qui permet de conférer à l'écoulement dans la roue une composante centripète, en direction de l'axe de l'organe alors confondu avec l'axe de rotation de la roue, puis une composante centrifuge. Pour ce faire, la seconde surface est ménagée, par rapport à la première surface, à l'opposé de la partie de l'organe 10, 110, 210, 310, 410 ou 510 destinée à être raccordée sur le plafond 3 ou équivalent ou sur le moyeu de la roue.

Dans tous les cas, les première et seconde surfaces de l'organe sont convergentes l'une en direction de l'autre.

La première surface de l'organe conforme à l'invention est convergente en direction de la seconde. Sa seconde surface est, quant à elle, divergente en s'éloignant de la première.

## Revendications

1. Organe apte à être rapporté sur le plafond ou le moyeu d'une roue de machine hydraulique, ledit organe étant pourvu d'une surface axisymétrique apte à être disposée dans le prolongement de la surface mouillée dudit plafond ou moyeu et convergente, en s'éloignant de ladite surface mouillée et en direction de l'axe de rotation de ladite roue lorsque ledit organe est rapporté sur ladite roue, **caractérisé en ce que** ledit organe (10 ; 110 ; 210 ; 310 ; 410 ; 510) est également pourvu d'une seconde surface axisymétrique (13a ; 113a ; 213a ; 313a ; 413a ; 513a) décalée axialement par rapport à ladite première surface convergente (11a ; 111a ; 211a ; 311a ; 411a ; 511a), ladite seconde surface étant divergente en s'éloignant de ladite première surface convergente.

2. Organe selon la revendication 1, **caractérisé en ce qu'**il est pourvu d'une surface globalement cylindrique (12a ; 212a; 312a ; 412a ; 512a) disposée entre lesdites surfaces convergente (11a ; 111a ; 211a ; 311a ; 411a ; 511a) et divergente (13a ; 113a ; 213a ; 313a ; 413a ; 513a).

3. Organe selon l'une des revendications précédentes, **caractérisé en ce qu'**il est pourvu d'une surface de terminaison (14a ; 314a ; 414a ; 514a) prolongeant ladite surface divergente (13a ; 313a ; 413a ; 513a) à l'opposé de ladite surface convergente (11a ; 311a ; 411a ; 511a).

4. Organe selon la revendication 3, **caractérisé en ce que** ladite surface de terminaison (14a ; 314a) est génératrice sensiblement rectiligne.

5. Organe selon la revendication 3, **caractérisé en ce que** ladite surface de terminaison (414a ; 514a) est à génératrice courbe.

6. Organe selon l'une des revendications précédentes, **caractérisé en ce que** lesdites surfaces (11a-14a ; 111a-113a ; 211a-213a ; 311a-314a ; 411a-414a ; 511a-514a) sont à symétrie de révolution autour d'un axe commun (X₁₀-X'₁₀ ; X₁₁₀-X'₁₁₀ ; X₂₁₀-X'₂₁₀ ; X₃₁₀- X'₃₁₀ ; X₄₁₀-X'₄₁₀, X₅₁₀-X'₅₁₀) qui est confondu avec l'axe de rotation (X-X') de ladite roue (1) lorsque ledit organe est rapporté sur ladite roue.

7. Organe selon l'une des revendications précédentes, **caractérisé en ce qu'**il est réalisé en métal ou en matériau composite.

8. Organe selon l'une des revendications précédentes, **caractérisé en ce qu'**il est monobloc.

9. Organe selon l'une des revendications 1 à 7, **caractérisé en ce qu'**il est formé d'au moins deux pièces assemblées (10a, 10b), lesdites surfaces convergente (11a ; 111a ; 211a ; 311a ; 411a ; 511a) et divergente (13a ; 113a ; 213a ; 313a ; 413a ; 513a) étant formées par deux pièces distinctes (10a, 10b) dudit organe (10 ; 110 ; 210 ; 310 ; 410 ; 510).

10. Organe selon la revendication 9, **caractérisé en ce que** la position relative (h₁₂) desdites surfaces convergente (11a ; 111a ; 211a ; 311a ; 411a ; 511a) et divergente (13a ; 113a ; 213a ; 313a ; 413a ; 513a) est réglable.

11. Roue de machine hydraulique (1) équipée d'un organe (10 ; 110 ; 210 ; 310 ; 410 ; 510) selon l'une des revendications précédentes.

12. Roue selon la revendication 11, **caractérisée en ce que** ledit organe (10) dépasse (d₁₄) en deçà de la ceinture (4) de ladite roue.

13. Machine hydraulique équipée d'une roue (1) selon l'une des revendications 11 ou 12.

14. Procédé d'assemblage d'une roue selon l'une des revendications 11 ou 12 ou d'une machine selon la revendication 13, **caractérisé en ce qu'**il comprend une étape dans laquelle on fixe (F₁) sur le plafond (3) de ladite roue (1) un organe (10 ; 110 ; 210 ; 310 ; 410 ; 510) selon l'une des revendications 1 à 9.

15. Procédé selon la revendication 14, **caractérisé en ce que** ledit organe (10) est selon la revendication 9 et **en ce qu'**on fixe d'abord une première pièce (10a) constitutive dudit organe sur ledit plafond (3) puis une seconde pièce (10b) constitutive dudit organe sur la première pièce.

## Claims

1. Member which is suitable for being attached to the upper portion or the hub of a wheel of a hydraulic machine, the member being provided with an axially symmetrical surface which is suitable for being arranged in the extension of the wet surface of the upper portion or hub and which is convergent, in a direction moving away from the wet surface and in the direction of the axis of rotation of the wheel when the member is attached to the wheel, **characterized in that** the member (10; 110; 210; 310; 410; 510) is also provided with a second axially symmetrical surface (13a; 113a; 213a; 313a; 413a; 513a) which is offset along the axis relative to the first convergent surface (11a; 111a; 211a; 311a; 411a; 511a), the second surface being divergent in a direction moving away from the first convergent surface.

2. Member according to claim 1, **characterized in that** it is provided with a generally cylindrical surface (12a; 212a; 312a; 412a; 512a) which is arranged between the convergent surface (11a; 111a; 211a; 311a; 411a; 511a) and divergent surface (13a; 113a; 213a; 313a; 413a; 513a).

3. Member according to any one of the preceding claims, **characterized in that** it is provided with an end surface (14a; 314a; 414a; 514a) which extends the divergent surface (13a; 313a; 413a; 513a) in the direction opposite to the convergent surface (11a; 311a; 411a; 511a).

4. Member according to claim 3, **characterized in that** the end surface (14a; 314a) has a substantially rectilinear generatrix.

5. Member according to claim 3, **characterized in that** the end surface (414a; 514a) has a curved generatrix.

6. Member according to any one of the preceding claims, **characterized in that** the surfaces (11a-14a; 111a-113a; 211a-213a; 311a-314a; 411a-414a; 511a-514a) have symmetry of revolution about a common axis X₁₀-X'₁₀; X₁₁₀-X'₁₁₀; X₂₁₀-X'₂₁₀; X₃₁₀-X'₃₁₀; X₄₁₀-X'₄₁₀; X₅₁₀-X'₅₁₀) which is aligned with the axis of rotation (X-X') of the wheel (1) when the member is attached to the wheel.

7. Member according to any one of the preceding claims, **characterized in that** it is composed of metal or composite material.

8. Member according to any one of the preceding claims, **characterized in that** it is integral.

9. Member according to any one of claims 1 to 7, **characterized in that** it is formed by at least two assembled pieces (10a, 10b), the convergent surface (11a; 111a; 211a; 311a; 411a; 511a) and divergent surface (13a; 113a; 213a; 313a; 413a; 513a) being formed by two separate pieces (10a, 10b) of the member (10; 110; 210; 310; 410; 510).

10. Member according to claim 9, **characterized in that** the relative position (h₁₂) of the convergent surface (11a; 111a; 211a; 311a; 411a; 511a) and divergent surface (13a; 113a; 213a; 313a; 413a; 513a) is adjustable.

11. Wheel of a hydraulic machine (1) which is provided with a member (10; 110; 210; 310; 410; 510) according to any one of the preceding claims.

12. Wheel according to claim 11, **characterized in that** the member (10) extends (d₁₄) below the band (4) of the wheel.

13. Hydraulic machine provided with a wheel (1) according to either claim 11 or 12.

14. Method for assembling a wheel according to either claim 11 or 12, or a machine according to claim 13, **characterized in that** it comprises a step in which a member (10; 110; 210; 310; 410; 510) according to any one of claims 1 to 9 is fixed (F₁) to the upper portion (3) of the wheel (1).

15. Method according to claim 14, **characterized in that** the member (10) is in accordance with claim 9 and **in that**, firstly, a first constituent piece (10a) of the member is fixed to the upper portion (3) then a second constituent piece (10b) of the member is fixed to the first piece.

## Patentansprüche

1. Organ, geeignet, an der Decke oder der Nabe eines Laufrades einer hydraulischen Maschine angebracht zu werden, wobei das Organ mit einer achsensymmetrischen Fläche versehen ist, die geeignet ist, in der Verlängerung der benetzten Fläche der Decke oder der Nabe angeordnet zu werden und konvergierend ist, indem sie sich von der benetzten Fläche und in Richtung der Rotationsachse des Laufrades entfernt, wenn das Organ am Laufrad angebracht ist, **dadurch gekennzeichnet, dass** das Organ (10; 110; 210; 310; 410; 510) auch mit einer zweiten achsensymmetrischen Fläche (13a; 113a; 213a; 313a; 413a; 513a) versehen ist, die axial in Bezug auf die erste konvergierende Fläche (11a; 111a; 211a; 311a; 411a; 511a) versetzt ist, wobei die zweite Fläche divergierend ist, indem sie sich von der ersten konvergierenden Fläche entfernt.

2. Organ nach Anspruch 1, **dadurch gekennzeichnet, dass** es mit einer im Ganzen gesehen zylindrischen Fläche (12a; 212a; 312a; 412a; 512a) versehen ist, die zwischen den konvergierenden (11a; 111a; 211a; 311a; 411a; 511a) und divergierenden (13a; 113a; 213a; 313a; 413a; 513a) Fläche angeordnet ist.

3. Organ nach einem der vorhergehenden Ansprüche, **dadurch gekennzeichnet, dass** es mit einer Abschlussfläche (14a; 314a; 414a; 514a) versehen ist, die die divergierende Fläche (13a; 313a; 413a; 513a) entgegengesetzt zu der konvergierenden Fläche (11a; 311a; 411a; 511a) verlängert.

4. Organ nach Anspruch 3, **dadurch gekennzeichnet, dass** die Abschlussfläche (14a; 314a) eine im Wesentlichen geradlinige Mantellinie aufweist.

5. Organ nach Anspruch 3, **dadurch gekennzeichnet, dass** die Abschlussfläche (414a, 514a) eine gekrümmte Mantellinie aufweist.

6. Organ nach einem der vorhergehenden Ansprüche, **dadurch gekennzeichnet, dass** die Flächen (11a-14a; 111a-113a; 211a-213a; 311a-313a; 411a-413a; 511a-513a) drehsymmetrisch um eine gemeinsame Achse (X₁₀-X'₁₀; X₁₁₀-X'₁₁₀; X₂₁₀-X'₂₁₀; X₃₁₀-X'₃₁₀; X₄₁₀-X'₄₁₀; X₅₁₀-X'₅₁₀) sind, die mit der Rotationsachse (X-X') des Laufrades (1) übereinstimmt, wenn das Organ an dem Laufrad angebracht ist.

7. Organ nach einem der vorhergehenden Ansprüche, **dadurch gekennzeichnet, dass** es aus einem Metall oder aus einem Verbundmaterial hergestellt ist.

8. Organ nach einem der vorhergehenden Ansprüche, **dadurch gekennzeichnet, dass** es einstückig ist.

9. Organ nach einem der Ansprüche 1 bis 7, **dadurch gekennzeichnet, dass** es aus mindestens zwei zusammengesetzten Stücken (10a, 10b) gebildet ist, wobei die konvergierende (11a; 111a; 211a; 311a; 411a; 511a) und die divergierende Fläche (13a; 113a; 213a; 313a; 413a; 513a) aus zwei verschiedenen Stücken (10a, 10b) des Organs (10; 110; 210; 310; 410; 510) gebildet sind.

10. Organ nach Anspruch 9, **dadurch gekennzeichnet, dass** die relative Position (h₁₂) der konvergierenden (11a; 111a; 211a; 311a; 411a; 511a) und divergierenden (13a; 113a; 213a; 313a; 413a; 513a) Flächen einstellbar ist.

11. Laufrad (1) einer hydraulischen Maschine, ausgerüstet mit einem Organ (10; 110; 210; 310; 410; 510) nach einem der vorhergehenden Ansprüche.

12. Laufrad nach Anspruch 11, **dadurch gekennzeichnet, dass** das Organ (10) über den Bund des Laufrades hinausgeht (d₁₄).

13. Hydraulische Maschine, ausgerüstet mit einem Laufrad (1) nach einem der Ansprüche 11 oder 12.

14. Verfahren zum Zusammensetzen eines Laufrades nach einem der Ansprüche 11 oder 12 oder einer Maschine nach Anspruch 13, **dadurch gekennzeichnet, dass** es einen Schritt umfasst, bei dem man an (F₁) der Decke (3) des Laufrades (1) ein Organ (10; 110; 210; 310; 410; 510) nach einem der Ansprüche 1 bis 9 befestigt.

15. Verfahren nach Anspruch 14, **dadurch gekennzeichnet, dass** das Organ (10) nach Anspruch 9 ausgebildet ist und dass man zuerst einen ersten Bestandteil (10a) des Organs an der Decke (3) und dann einen zweiten Bestandteil (10b) des Organs an dem ersten Bestandteil befestigt.
